# EUROPEAN PATENT APPLICATION

(11) **EP 4 579 812 A1**
(43) Date of publication of application: **02.07.2025**
(21) Application number: 23930747.3
(22) Date of filing: 11.09.2023
(51) Int. Cl.: H01M 4/525, C01G 53/00, H01M 4/505

(54) **POSITIVE ELECTRODE ACTIVE MATERIAL FOR LITHIUM ION BATTERIES, POSITIVE ELECTRODE FOR LITHIUM ION BATTERIES, LITHIUM ION BATTERY, METHOD FOR PRODUCING PRECURSOR OF POSITIVE ELECTRODE ACTIVE MATERIAL FOR LITHIUM ION BATTERIES, AND METHOD FOR PRODUCING POSITIVE ELECTRODE ACTIVE MATERIAL FOR LITHIUM ION BATTERIES**

(30) Priority: 30.03.2023 JP 2023056746
(71) Applicant: JX Advanced Metals Corporation, Tokyo 105-8417 (JP)
(72) Inventor: KAWAHASHI, Yasuhiro, Kitaibaraki-shi, Ibaraki 319-1535 (JP)
(74) Representative: Yeadon IP Limited
(86) International application number: PCT/JP2023/033078
(87) International publication number: WO 2024/202115

(57) **Abstract**

A positive electrode active material for a lithium ion battery, represented by the formula: LiaNi_{(1-b-c-d)}Co_{b}Mn_{c}Mg_{d}O₂
(wherein, in the formula, 0.98≤a≤1.09, 0.06≤b≤0.21, 0.02≤c≤0.32, 0.00005≤d≤0.003), having a 50% cumulative volumetric particle size D50 of 3.0 to 11.0 µm, a tap density of 2.0 to 2.6 g/cc, and a c-axis lattice constant of 14.184 to 14.240 Å.

## Description

### FIELD OF THE INVENTION

The present invention relates to a positive electrode active material for lithium ion batteries, positive electrode for lithium ion batteries, lithium ion battery, method for producing precursor of positive electrode active material for lithium ion batteries, and method for producing positive electrode active material for lithium ion batteries.

### BACKGROUND OF THE INVENTION

In recent years, with the rapid expansion of small electronic devices such as mobile phones and notebook computers, the demand for non-aqueous electrolyte secondary batteries as chargeable and dischargeable power sources has been growing rapidly. As the positive electrode active material for non-aqueous electrolyte secondary batteries, lithium-cobalt composite oxides such as lithium cobalt oxide (LiCoO₂), lithium-nickel composite oxides such as lithium nickel oxide (LiNiO₂), and lithium-manganese composite oxides such as lithium manganese oxide (LiMnO₂) are widely used.

However, nickel and cobalt are relatively expensive metals, and cobalt in particular is produced in a limited number of countries, and is known as a metal with unstable supply and demand. For this reason, in recent years, as disclosed in Patent Literature 1, a method has been attempted in which metal components such as lithium, nickel, and cobalt are recovered in high purity from discarded electrodes and discarded batteries and recycled into positive electrode active materials again.

### CITATION LIST

### Patent Literatures

[Patent Literature 1] Japanese Unexamined Patent Application Publication No. 2022-532575
[Patent Literature 2] Japanese Unexamined Patent Application Publication No. Hei 11-354118

### SUMMARY OF THE INVENTION

Although the demand for positive electrode active materials for lithium ion secondary batteries is increasing, there is a problem that excellent positive electrode active materials have variations in cycle performance and storage stability depending on the purity of the synthesis raw materials and the refining conditions. For this reason, as disclosed in Patent Literature 2, it is necessary to control the purity of the positive electrode active material.

In waste electrodes and waste batteries, various metals are contained in the can body and in the flame retardant material for preventing ignition, and a large refining cost is required to recover high-purity nickel, cobalt, and lithium, resulting in high production costs for the positive electrode active material. In particular, Mg is difficult to purify and extract, and a corresponding recycling cost must be incurred to completely remove it.

Thus, from the viewpoint of controlling the purity in the positive electrode active material to improve battery characteristics, it is desirable to eliminate impurities such as Mg, but on the other hand, when recovering high-purity nickel, cobalt, and lithium by recycling waste electrodes and waste batteries, the cost of removing Mg is a problem.

The present invention has been made to solve the above problems, and aims to provide a positive electrode active material for lithium ion batteries that contains Mg and shows good battery characteristics, a positive electrode for lithium ion batteries, a lithium ion battery, a method for producing a precursor of a positive electrode active material for lithium ion batteries, and a method for producing a positive electrode active material for lithium ion batteries.

The above problems are solved by the present invention, which is specified as follows.
(1) A positive electrode active material for a lithium ion battery, represented by the formula: LiₐNi_{(1-b-c-d)}Co_{b}Mn_{c}Mg_{d}O₂
   (wherein, in the formula, 0.98≤a≤1.09, 0.06≤b≤0.21, 0.02≤c≤0.32, 0.00005≤d≤0.003), having a 50% cumulative volumetric particle size D50 of 3.0 to 11.0 µm, a tap density of 2.0 to 2.6 g/cc, and a c-axis lattice constant of 14.184 to 14.240 Å.
(2) The positive electrode active material for a lithium ion battery according to (1), having a BET specific surface area of 0.20 to 0.80 m²/g.
(3) A positive electrode for a lithium ion battery, comprising the positive electrode active material for a lithium ion battery according to claim (1) or (2).
(4) A lithium ion battery comprising the positive electrode and negative electrode for lithium ion batteries according to claim (3).
(5) A method for producing a precursor of a positive electrode active material for a lithium ion battery, comprising:
   carrying out a crystallization reaction using an aqueous solution containing (a) a nickel salt, (b) a cobalt salt, (c) a manganese salt, and (d) a magnesium salt, and (e) a basic aqueous solution containing ammonia and/or an alkaline aqueous solution of an alkali metal as a reaction solution, while controlling a pH of the reaction solution to 10.0 to 11.5, an ammonium ion concentration to 5 to 20 g/L, and a solution temperature to 59 to 61°C,
   wherein the precursor of a positive electrode active material for a lithium ion battery is represented by the formula: Ni_{(1-b-c-d)}CO_{b}Mn_{c}Mg_{d}(OH)₂
   (wherein, in the formula, 0.06≤b≤0.21, 0.02≤c≤0.32, 0.00005≤d≤0.003) and
   wherein the precursor of a positive electrode active material for a lithium ion battery has a 50% cumulative volumetric particle size D50 of 3.0 to 11.0 µm, a tap density of 1.8 to 2.3 g/cc, and a BET specific surface area of 4.0 to 12.0 m²/g.
(6) A method for producing a positive electrode active material for a lithium ion battery, comprising: mixing a precursor produced by the method for producing a precursor for a positive electrode active material for a lithium ion battery according to (5) with a lithium source so that a ratio of Liₙ/Meₙ, where Meₙ is a sum of atomic numbers of metals consisting of Ni, Co, Mn, and Mg (Meₙ) and Liₙ is atomic number of lithium, is 0.98 to 1.09 to form a lithium mixture; and baking the lithium mixture in air or an oxygen atmosphere at 450 to 750°C for 2 to 15 hours, and then baking it at 700 to 900°C for 2 to 15 hours.

According to the present invention, it is possible to provide a positive electrode active material for lithium ion batteries that contains Mg and shows good battery characteristics, a positive electrode for lithium ion batteries, a lithium ion battery, a method for producing a precursor of a positive electrode active material for lithium ion batteries, and a method for producing a positive electrode active material for lithium ion batteries.

### DETAILED DESCRIPTION OF THE INVENTION

Next, the embodiments for carrying out the present invention will be described in detail. It should be understood that the present invention is not limited to the following embodiments, and that appropriate changes and improvements in the design may be made based on the ordinary knowledge of those skilled in the art without departing from the spirit of the present invention.

### (Positive electrode active material for lithium ion batteries)

The positive electrode active material for lithium ion batteries according to the embodiment of the present invention is represented by the formula: LiaNi_{(1-b-c-d)}CO_{b}Mn_{c}Mg_{d}O₂ (wherein 0.98≤a≤1.09, 0.06≤b≤0.21, 0.02≤c≤0.32, and 0.00005≤d≤0.003). In the formula, the value of a, which indicates the lithium composition, is controlled to 0.98≤a≤1.09. Since the value of "a", which indicates the lithium composition, is 0.98 or more, it is possible to suppress the reduction of nickel due to lithium deficiency. In addition, since the value of "a", which indicates the lithium composition, is 1.09 or less, it is possible to suppress residual alkaline components such as lithium carbonate and lithium hydroxide present on the surface of the positive electrode active material particles, which may become resistance components when the battery is formed.

In the positive electrode active material for lithium ion batteries according to the embodiment of the present invention, the nickel composition in the composition formula is controlled to 1-b-c-d (0.467≤1-b-c-d≤0.91995), and since the nickel composition is 0.467 or more, good battery capacity of the lithium ion battery can be obtained. In addition, since the nickel composition is 0.91995 or less, the crystal structure is stable, and the cycle characteristics can be improved by reducing the expansion and contraction behavior of the crystal lattice due to the insertion and desorption of lithium during charging and discharging.

In the positive electrode active material for lithium ion batteries according to the embodiment of the present invention, the sum of "b" indicating the cobalt composition, "c" indicating the manganese composition, and "d" indicating the magnesium composition in the composition formula is 0.08005≤b+c+d≤0.533, and therefore the cycle characteristics are improved and the expansion and contraction behavior of the crystal lattice due to the insertion and desorption of lithium during charging and discharging can be reduced. If the sum of the cobalt composition, manganese composition, and magnesium composition exceeds 0.533, the amount of cobalt, manganese, and magnesium added may be too large, resulting in a large decrease in initial discharge capacity, or may be disadvantageous in terms of cost.

In the positive electrode active material for lithium ion batteries according to the embodiment of the present invention, "d", which indicates the magnesium composition, is controlled to 0.00005≤d≤0.003. Since "d", which indicates the magnesium composition, is 0.00005 or more, cycle characteristics are improved and the expansion and contraction behavior of the crystal lattice due to insertion and removal of lithium during charging and discharging can be reduced. If "d", which indicates the magnesium composition, exceeds 0.003, the amount of magnesium added is too large, resulting in a large decrease in initial discharge capacity. Thus, the positive electrode active material for lithium ion batteries according to the embodiment of the present invention contains Mg, but the battery characteristics of the lithium ion battery using it are good. Therefore, when recovering high-purity nickel, cobalt, and lithium for recycling discarded electrodes or waste batteries, it is possible to produce a lithium-ion battery having good battery characteristics by using the positive electrode active material for lithium-ion batteries while suppressing the cost of removing Mg.

The positive electrode active material for lithium ion batteries according to the embodiment of the present invention has a form of secondary particles in which a plurality of primary particles are aggregated, and may have a form in which some primary particles are not aggregated as secondary particles. The shapes of the primary particles constituting the secondary particles and the primary particles existing alone are not particularly limited, and may have various shapes such as, for example, approximately spherical, approximately elliptical, approximately plate-like, approximately needle-like, etc. The form in which the plurality of primary particles are aggregated is also not particularly limited, and may have various forms such as, for example, a form in which the particles aggregate in a random direction, or a form in which the particles aggregate almost evenly radially from the center to form approximately spherical or approximately elliptical secondary particles.

The positive electrode active material for lithium ion batteries according to the embodiment of the present invention has a 50% cumulative volume particle size D50 of 3.0 to 11.0 µm. Here, the 50% cumulative volume particle size D50 is the volume particle size at 50% accumulation in a volume-based cumulative particle size distribution curve. When the 50% cumulative volume particle size D50 of the positive electrode active material for lithium ion batteries is 3.0 µm or less, the tap density decreases, and the energy density per volume decreases. When the 50% cumulative volume particle size D50 of the positive electrode active material for lithium ion batteries is 11.0 µm or more, the number of coarse particles increases, and the coating property deteriorates when the slurried positive electrode active material is applied to the current collector. The 50% cumulative volume particle size D50 of the positive electrode active material for lithium ion batteries is more preferably 4.0 to 11.0 µm, and even more preferably 7.0 to 10.0 µm. As a method for measuring the 50% cumulative volume particle size D50, first, 100 mg of a sample (powder) of the positive electrode active material is dispersed by irradiating 40 W ultrasonic waves for 60 seconds at 50% flow rate using a laser diffraction type particle size distribution measuring device "MT3300EXII" manufactured by Microtrac, and then the particle size distribution is measured to obtain a volume-based cumulative particle size distribution curve. Next, in the obtained cumulative particle size distribution curve, the volume particle size at 50% accumulation can be taken as the 50% cumulative volume particle size D50 of the powder of the positive electrode active material. The water-soluble solvent used in the measurement is passed through a 0.02 µm filter, the solvent refractive index is 1.333, the particle permeability conditions are transparent, the particle refractive index is 1.81, the shape is non-spherical, the measurement range is 0.021 to 2000 µm, and the measurement time is 30 seconds.

The positive electrode active material for lithium ion batteries according to an embodiment of the present invention has a tap density of 2.0 to 2.6 g/cc. If the tap density of the positive electrode active material is 2.0 g/cc or more, a battery with a high energy density per volume can be constructed. The tap density of the positive electrode active material is preferably 2.1 to 2.6 g/cc, and more preferably 2.3 to 2.6 g/cc. The tap density of the positive electrode active material is measured, for example, by putting 5 g of the positive electrode active material (powder) into a 10 cc graduated cylinder, placing it in a powder density measuring device "KYT-4000K" manufactured by Seishin Enterprise Co., Ltd., tapping with a stroke length of 55 mm 1500 times, and then reading the graduations on the graduated cylinder. Next, "sample amount put in (5 g)/graduated cylinder graduation reading (cc)" is calculated, and this is taken as the tap density (g/cc).

The positive electrode active material for lithium ion batteries according to an embodiment of the present invention has a c-axis lattice constant controlled to 14.184-14.240 Å. If the c-axis lattice constant of the positive electrode active material is 14.184 Å or more, the crystal structure of the positive electrode active material for lithium ion batteries can be stabilized and Li insertion/extraction can be ensured. If the c-axis lattice constant of the positive electrode active material exceeds 14.240 Å, the crystal lattice is distorted, and the charge/discharge capacity of the lithium ion battery may be deteriorated due to the influence of a decrease in load characteristics caused by a decrease in the mobility of Li. The c-axis lattice constant of the positive electrode active material is preferably 14.185-14.238 Å, and more preferably 14.190-14.235 Å. The c-axis lattice constant of the positive electrode active material can be measured, for example, using the following XRD diffractometer under the following conditions.
- XRD diffractometer: SmartLab (Rigaku Corporation)
- Radiation source: CuKα (λ=1.5406Å)
- Apply the sample (positive electrode active material) to a glass sample holder (2cm x 1.5cm, 0.3mm deep).

### Detector: D/tex

Measurement range: 2θ = 10° to 80°
Scan axis: 2θ/θ, scan speed: 1 degree min⁻¹
Step width: 0.01 degree
Slit width: IS (DS) 1/4°, RS1 10 mm, RS2 10 mm

The c-axis lattice constant can be calculated using the analysis software "PDXL, Rigaku Corporation" from the peaks derived from a total of nine crystal faces of (003), (101), (012), (104), (015), (107), (018), (110), and (113) in the XRD diffraction pattern measured under the above conditions.

The positive electrode active material for lithium-ion batteries according to the embodiment of the present invention preferably has a BET specific surface area of 0.20 to 0.80 m²/g. If the BET specific surface area is 0.20 m²/g or more, the contact area of the positive electrode active material is large, and the conductivity of Li ions is good. Therefore, it is possible to manufacture a high-capacity lithium-ion battery. If the BET specific surface area is 0.80 m²/g or less, the precipitation reaction of lithium ions from the residual alkali in the positive electrode active material is promoted during repeated charging and discharging. The precipitated lithium compound becomes the internal resistance of the battery, reducing the charge and discharge capacity. The BET specific surface area is more preferably 0.3 to 0.70 m²/g. The BET specific surface area can be measured by the following method. That is, first, 1.0 g of the positive electrode active material (powder) is weighed into a glass cell, set in a degassing device, and the glass cell is filled with nitrogen gas, and then heat-treated in a nitrogen gas atmosphere at 40°C for 20 minutes to degas it. Thereafter, the glass cell containing the degassed sample (powder) is set in a specific surface area measuring device "Monosorb Model MS-21" manufactured by Quantachrome, and the specific surface area X is measured by the BET method (single point method) while flowing a mixed gas of He: 70 at % - N2: 30 at % as the adsorption gas.

### (Method of manufacturing a precursor of a positive electrode active material for lithium ion batteries)

Next, a method of manufacturing a precursor of a positive electrode active material for lithium ion batteries according to an embodiment of the present invention will be described in detail.

The precursor of a positive electrode active material for lithium ion batteries according to an embodiment of the present invention is represented by the composition formula: Ni_{(1-b-c-d)}CO_{b}Mn_{c}Mg_{d}(OH)₂
(in the formula, 0.06≤b≤0.21, 0.02≤c≤0.32, 0.00005≤d≤0.003), has a 50% cumulative volumetric particle size D50 of 3.0 to 11.0 µm, a tap density of 1.8 to 2.3 g/cc, and a BET specific surface area of 4.0 to 12.0 m²/g.

In the method for producing a precursor of a positive electrode active material for a lithium ion battery according to an embodiment of the present invention, first, an aqueous solution containing (a) a nickel salt, (b) a cobalt salt, (c) a manganese salt, and (d) a magnesium salt is prepared, and (e) an aqueous solution containing a basic aqueous solution containing ammonia and/or an aqueous solution containing an alkali metal is prepared. (a) Examples of the nickel salt include nickel sulfate, nickel nitrate, or nickel hydrochloride. (b) Examples of the cobalt salt include cobalt sulfate, cobalt nitrate, or cobalt hydrochloride. (c) Examples of the manganese salt include manganese sulfate, manganese nitrate, or manganese hydrochloride. (d) Examples of the magnesium salt include magnesium sulfate, magnesium nitrate, or magnesium hydrochloride. The magnesium salt may be added as a raw material or may be mixed in as an impurity. (e) Examples of the basic aqueous solution containing ammonia include an aqueous ammonia solution, ammonium sulfate, ammonium carbonate, or ammonium hydrochloride. Examples of the basic aqueous solution of an alkali metal may be an aqueous solution of sodium hydroxide, potassium hydroxide, or a carbonate. Examples of the aqueous carbonate solution include aqueous solutions using salts of carbonate groups, such as an aqueous sodium carbonate solution, an aqueous potassium carbonate solution, an aqueous sodium hydrogen carbonate solution, and an aqueous potassium hydrogen carbonate solution.

The composition of the aqueous solution can be adjusted appropriately depending on the composition of the precursor to be produced, but it is preferable that the aqueous solution is (a) an aqueous solution containing 30 to 150 g/L of nickel ions, (b) an aqueous solution containing 3 to 25 g/L of cobalt ions, (c) an aqueous solution containing 1 to 32 g/L of manganese ions, (d) an aqueous solution containing 0.001 to 0.1 g/L of magnesium ions, or (e) a basic aqueous solution containing 7 to 28 mass% ammonia and/or a basic aqueous solution with an alkali metal concentration of 10 to 30 mass%.

Next, the aqueous solution containing the above-mentioned (a) nickel salt, (b) cobalt salt, (c) manganese salt, and (d) magnesium salt, and the aqueous solution containing (e) ammonia-containing basic aqueous solution and/or alkali metal basic aqueous solution are used as reaction solutions, and a crystallization reaction is carried out while controlling the pH of the reaction solution to 10.0 to 11.5, the ammonium ion concentration to 5 to 20 g/L, and the liquid temperature to 59 to 61°C. At this time, the chemical solutions may be sent to the reaction tank from three tanks: a tank containing a mixed aqueous solution of nickel salt, cobalt salt, manganese salt, and magnesium salt, a tank containing ammonia-containing basic aqueous solution, and a tank containing an alkali metal basic aqueous solution. By controlling the pH of the reaction solution during the coprecipitation reaction to 10.0 to 11.5, the ammonium ion concentration to 5 to 20 g/L, and the solution temperature to 59 to 61°C., the metal solubility in the reaction solution can be controlled, particles in which magnesium is uniformly dispersed can be produced, and a precursor of the positive electrode active material according to the embodiment of the present invention with good discharge characteristics can be produced. In addition, by optimizing the reaction conditions of the metal hydroxide precursor as described above, the adhesion of impurities to the surface of the positive electrode active material obtained after baking is well suppressed, making cleaning unnecessary. Furthermore, a chelating agent or metal oxide coat during the coprecipitation reaction is not required. As a result, the production efficiency is improved.

### (Method of manufacturing a positive electrode active material for lithium ion batteries)

Next, a method of manufacturing a positive electrode active material for lithium ion batteries according to an embodiment of the present invention will be described in detail. In the method of manufacturing a positive electrode active material for lithium ion batteries according to an embodiment of the present invention, a lithium source is first mixed with the precursor of the positive electrode active material for lithium ion batteries according to an embodiment of the present invention prepared as described above, so that the ratio (Lin/Men) of the sum of the atomic numbers of metals consisting of Ni, Co, Mn, and Mg (Meₙ) to the atomic number of lithium (Lin) is 0.98 to 1.09 to form a lithium mixture. Examples of the lithium source include lithium carbonate and lithium hydroxide. As a mixing method, it is preferable to adjust the mixing ratio of each raw material and dry mix it with a Henschel mixer, an automatic mortar, a V-type mixer, or the like.

Then, the lithium mixture is baked in an air atmosphere, preferably in an oxygen atmosphere, at 450 to 750°C for 2 to 15 hours in the air or oxygen atmosphere, and then baked at 700 to 900°C for 2 to 15 hours. If necessary, the baked body can then be crushed using, for example, a pulverizer to obtain a powder of the positive electrode active material.

### (Positive electrode for lithium ion batteries and lithium ion batteries)

The positive electrode for lithium ion batteries according to the embodiment of the present invention has a structure in which a positive electrode mixture prepared by mixing, for example, the positive electrode active material for lithium ion batteries having the above-mentioned configuration, a conductive additive, and a binder is provided on one or both sides of a current collector. The lithium ion battery according to the embodiment of the present invention also has a positive electrode for lithium ion batteries having such a configuration and a known negative electrode for lithium ion batteries.

The conductive assistant materials include metal-based conductive assistant materials (aluminum, stainless steel (SUS), silver, gold, copper, titanium, etc.), carbon-based conductive assistant materials (graphite and carbon black (acetylene black, ketjen black, furnace black, channel black, thermal lamp black), etc.), and mixtures thereof. These conductive assistant materials may be used alone or in combination of two or more. They may also be used as alloys or metal oxides. Among these, from the viewpoint of electrical stability, aluminum, stainless steel, silver, gold, copper, titanium, carbon-based conductive assistant materials, and mixtures thereof are more preferable, silver, gold, aluminum, stainless steel, and carbon-based conductive assistant materials are even more preferable, and carbon-based conductive assistant materials are particularly preferable. These conductive assistant materials may also be particles of ceramic materials or resin materials coated with a conductive material (preferably a metal one of the conductive assistant materials described above) by plating or the like. The shape (form) of the conductive additive is not limited to a particulate form, and may be a form other than a particulate form, and may be a form that has been put to practical use as a so-called filler-based conductive additive, such as carbon nanofibers or carbon nanotubes.

Binders include substances that are commonly used in positive electrode mixtures for lithium ion batteries, but copolymers having a structure derived from vinylidene fluoride, polyvinylidene fluoride (PVDF), copolymers or homopolymers having a structure derived from tetrafluoroethylene (TEF), and copolymers or homopolymers having a structure derived from hexafluoropropylene (HFP) are preferred. Specific examples include PVDF-HFP, PVDF-HFP-TEF, PVDF-TEF, TEF-HFP, etc.

The positive electrode mixture is made by mixing a positive electrode active material for lithium ion batteries, a conductive additive, and a binder in a solvent to form a positive electrode mixture slurry, which is then applied to one or both sides of a current collector and, after drying, etc., provided on the current collector to form a positive electrode active material layer.

As the solvent for the positive electrode mixture slurry, known organic solvents such as hydrocarbon organic solvents, amide compounds, lactam compounds, urea compounds, organic sulfur compounds, cyclic organic phosphorus compounds, etc. can be used as a single solvent or as a mixed solvent. As the hydrocarbon organic solvent, saturated hydrocarbons, unsaturated hydrocarbons, or aromatic hydrocarbons can be used. As the saturated hydrocarbons, hexane, pentane, 2-ethylhexane, heptane, decane, cyclohexane, etc. can be mentioned. As the unsaturated hydrocarbons, hexene, heptene, cyclohexene, etc. can be mentioned. As the aromatic hydrocarbons, toluene, xylene, decalin, 1,2,3,4-tetrahydronaphthalene, etc. can be mentioned. Of these, toluene and xylene are particularly preferred.

As the material for constituting the current collector, metal materials such as copper, aluminum, titanium, stainless steel, nickel, and alloys thereof, as well as baked carbon, conductive polymer materials, conductive glass, etc. can be mentioned. Among them, aluminum is more preferred from the viewpoints of weight reduction, corrosion resistance, and high conductivity. The current collector is preferably a resin current collector made of a conductive polymer material. The shape of the current collector is not particularly limited, and may be a sheet-shaped current collector made of the above material, or a deposition layer made of fine particles made of the above material. The thickness of the current collector is not particularly limited, but is preferably 1 to 30 µm. Examples of the conductive polymer material that constitutes the resin current collector include conductive polymers and resins to which a conductive agent is added as necessary.

From the viewpoint of battery performance, the thickness of the positive electrode for lithium-ion batteries is preferably 10 to 100 µm, and more preferably 20 to 50 µm.

A lithium-ion battery using a positive electrode for lithium-ion batteries is obtained by combining a negative electrode as a counter electrode, storing it together with a separator in a cell container, injecting an electrolyte, and sealing the cell container. Alternatively, a bipolar electrode can be produced by forming a positive electrode on one side of a current collector and a negative electrode on the other side, laminating the bipolar electrode with a separator, housing the bipolar electrode in a cell container, injecting the electrolyte, and sealing the cell container.

Examples of negative electrodes include those containing a negative electrode active material, a conductive assistant, and a current collector. As the negative electrode active material, known negative electrode active materials for lithium ion batteries can be used, and examples of the negative electrode active material include carbon-based materials (graphite, non-graphitizable carbon, amorphous carbon, resin baked bodies (e.g., phenolic resins and furan resins baked and carbonized, etc.), cokes (e.g., pitch coke, needle coke, petroleum coke, etc.), and carbon fibers, etc.), silicon-based materials (silicon, silicon oxide (SiOx), silicon-carbon composites (carbon particles whose surfaces are coated with silicon and/or silicon carbide, silicon particles or silicon oxide particles whose surfaces are coated with carbon and/or silicon carbide, silicon carbide, etc.), and and silicon alloys (silicon-aluminum alloys, silicon-lithium alloys, silicon-nickel alloys, silicon-iron alloys, silicon-titanium alloys, silicon-manganese alloys, silicon-copper alloys, silicon-tin alloys, etc.), conductive polymers (e.g., polyacetylene and polypyrrole), metals (tin, aluminum, zirconium, titanium, etc.), metal oxides (titanium oxide and lithium-titanium oxide, etc.), metal alloys (e.g., lithium-tin alloys, lithium-aluminum alloys, and lithium-aluminum-manganese alloys, etc.), and mixtures of these with carbon-based materials. In addition, the conductive assistant can be suitably used as the conductive assistant for the positive electrode described above.

The current collector may be the same as the current collector constituting the positive electrode described above, and is preferably copper from the viewpoints of weight reduction, corrosion resistance, and high conductivity. A resin current collector may also be used, and the same current collector as the current collector constituting the positive electrode described above can be preferably used. The thickness of the current collector is not particularly limited, but is preferably 10 to 60 µm.

The separator may be a porous film made of polyethylene or polypropylene, a laminated film of a porous polyethylene film and a porous polypropylene film, a nonwoven fabric made of synthetic fibers (polyester fibers, aramid fibers, etc.) or glass fibers, or the like, and known separators for lithium ion batteries, such as those having ceramic particles such as silica, alumina, and titania attached to their surfaces.

### EXAMPLES

The following examples of the present invention are provided to better understand the present invention and its advantages and are not intended to limit the invention.

### (Example 1)

First, a 1.5 mol/L mixed metal salt solution was prepared by weighing out a predetermined amount of nickel sulfate, cobalt sulfate, and manganese sulfate so that the Ni:Co:Mn ratio was 50:20:30. The Mg concentration of this mixed metal salt solution was 0.007 g/L.

Next, the mixed metal salt solution, ammonia water, and a 20% by mass aqueous solution of sodium hydroxide were sent to a reaction vessel equipped with an agitator so that the pH in the reaction vessel was 10.6 and the ammonium ion concentration was 10.3 g/L, and a crystallization reaction was carried out to precipitate a nickel-cobalt-manganese composite hydroxide compound. At this time, the rotation speed of the agitator in the reaction vessel was set to 1000 rpm, and the liquid temperature in the reaction vessel was kept at 60°C by keeping it warm with a water jacket.

In addition, nitrogen gas was introduced into the reaction vessel to prevent oxidation of the coprecipitate produced by the crystallization reaction. The gas introduced into the reaction tank is not limited to the nitrogen gas, and any gas that does not promote oxidation, such as helium, neon, argon, or carbon dioxide, can be used.

The precipitate obtained was then filtered by suction, washed with water, and dried at 120°C for 12 hours using a box dryer. This produced a precursor of the positive electrode active material.

Then, lithium carbonate and the precursor of the positive electrode active material were mixed so that the ratio (Li/Me) of the number of lithium (Li) atoms to the sum of the number of metal atoms of Ni, Co, and Mn in the precursor of the positive electrode active material, Me, was 1.06, and mixed in an automatic mortar for 30 minutes to obtain a mixed powder. The mixed powder was then filled into an alumina sagger, and calcined in a muffle furnace in an air atmosphere at 750°C for 2 hours, and then heated to 900°C and held at that temperature for 8 hours to obtain a positive electrode active material.

### (Example 2)

First, a 1.5 mol/L mixed metal salt solution was prepared by weighing out a predetermined amount of nickel sulfate, cobalt sulfate, and manganese sulfate so that the Ni:Co:Mn ratio was 50:20:30. The Mg concentration of this mixed metal salt solution was 0.008 g/L.

Next, the mixed metal salt solution, ammonia water, and a 20% by mass aqueous solution of sodium hydroxide were sent to a reaction vessel equipped with an agitator so that the pH in the reaction vessel was 10.4 and the ammonium ion concentration was 11.5 g/L, and a crystallization reaction was carried out to precipitate a nickel-cobalt-manganese composite hydroxide compound. At this time, the rotation speed of the agitator in the reaction vessel was set to 1000 rpm, and the liquid temperature in the reaction vessel was kept at 60°C by keeping it warm with a water jacket.

In addition, nitrogen gas was introduced into the reaction vessel to prevent oxidation of the coprecipitate produced by the crystallization reaction. The gas introduced into the reaction tank is not limited to the nitrogen gas, and any gas that does not promote oxidation, such as helium, neon, argon, or carbon dioxide, can be used.

The precipitate obtained was then filtered by suction, washed with water, and dried at 120°C for 12 hours using a box dryer. This produced a precursor of the positive electrode active material.

Then, lithium carbonate and the precursor of the positive electrode active material were mixed so that the ratio (Li/Me) of the number of lithium (Li) atoms to the sum of the number of metal atoms of Ni, Co, and Mn in the precursor of the positive electrode active material, Me, was 1.09, and mixed in an automatic mortar for 30 minutes to obtain a mixed powder. The mixed powder was then filled into an alumina sagger, and calcined in a muffle furnace in an air atmosphere at 750°C for 2 hours, and then heated to 900°C and held at that temperature for 8 hours to obtain a positive electrode active material.

### (Example 3)

First, a 1.5 mol/L mixed metal salt solution was prepared by weighing out a predetermined amount of nickel sulfate, cobalt sulfate, and manganese sulfate so that the Ni:Co:Mn ratio was 50:20:30. The Mg concentration of this mixed metal salt solution was 0.006 g/L.

Next, the mixed metal salt solution, ammonia water, and a 20% by mass aqueous solution of sodium hydroxide were sent to a reaction vessel equipped with an agitator so that the pH in the reaction vessel was 10.3 and the ammonium ion concentration was 8.2 g/L, and a crystallization reaction was carried out to precipitate a nickel-cobalt-manganese composite hydroxide compound. At this time, the rotation speed of the agitator in the reaction vessel was set to 1000 rpm, and the liquid temperature in the reaction vessel was kept at 60°C by keeping it warm with a water jacket.

In addition, nitrogen gas was introduced into the reaction vessel to prevent oxidation of the coprecipitate produced by the crystallization reaction. The gas introduced into the reaction tank is not limited to the nitrogen gas, and any gas that does not promote oxidation, such as helium, neon, argon, or carbon dioxide, can be used.

The precipitate obtained was then filtered by suction, washed with water, and dried at 120°C for 12 hours using a box dryer. This produced a precursor of the positive electrode active material.

Then, lithium carbonate and the precursor of the positive electrode active material were mixed so that the ratio (Li/Me) to the number of lithium (Li) atoms, where Me is the sum of the numbers of metal atoms consisting of Ni, Co, and Mn in the precursor of the positive electrode active material, was 1.06, and mixed in an automatic mortar for 30 minutes to obtain a mixed powder. The mixed powder was then filled into an alumina sagger, and calcined in a muffle furnace in an air atmosphere at 750°C for 2 hours, and then heated to 880°C and held at that temperature for 8 hours to obtain a positive electrode active material.

### (Example 4)

First, a 1.5 mol/L mixed metal salt solution was prepared by weighing out a predetermined amount of nickel sulfate, cobalt sulfate, and manganese sulfate so that the Ni:Co:Mn ratio was 50:20:30. The Mg concentration of this mixed metal salt solution was 0.007 g/L. Next, the mixed metal salt solution, ammonia water, and a 20% by mass aqueous solution of sodium hydroxide were sent to a reaction vessel equipped with an agitator so that the pH in the reaction vessel was 10.1 and the ammonium ion concentration was 11.2 g/L, and a crystallization reaction was carried out to precipitate a nickel-cobalt-manganese composite hydroxide compound. At this time, the rotation speed of the agitator in the reaction vessel was set to 1000 rpm, and the liquid temperature in the reaction vessel was kept at 60°C by keeping it warm with a water jacket. In addition, nitrogen gas was introduced into the reaction vessel to prevent oxidation of the coprecipitate produced by the crystallization reaction. The gas introduced into the reaction tank is not limited to the nitrogen gas, and any gas that does not promote oxidation, such as helium, neon, argon, or carbon dioxide, can be used.

The precipitate obtained was then filtered by suction, washed with water, and dried at 120°C for 12 hours using a box dryer. This produced a precursor of the positive electrode active material.

Then, lithium carbonate and the precursor of the positive electrode active material were mixed so that the ratio (Li/Me) to the number of lithium (Li) atoms, where Me is the sum of the number of metal atoms consisting of Ni, Co, and Mn in the precursor of the positive electrode active material, was 1.06, and mixed in an automatic mortar for 30 minutes to obtain a mixed powder. The mixed powder was then filled into an alumina sagger, and calcined in a muffle furnace in an air atmosphere at 750°C for 2 hours, and then heated to 900°C and held at that temperature for 8 hours to obtain a positive electrode active material.

### (Example 5)

First, a 1.5 mol/L mixed metal salt solution was prepared by weighing out a predetermined amount of nickel sulfate, cobalt sulfate, and manganese sulfate so that the Ni:Co:Mn ratio was 50:20:30. The Mg concentration of this mixed metal salt solution was 0.007 g/L.

Next, the mixed metal salt solution, ammonia water, and a 20% by mass aqueous solution of sodium hydroxide were sent to a reaction vessel equipped with an agitator so that the pH in the reaction vessel was 10.2 and the ammonium ion concentration was 11.3 g/L, and a crystallization reaction was carried out to precipitate a nickel-cobalt-manganese composite hydroxide compound. At this time, the rotation speed of the agitator in the reaction vessel was set to 1000 rpm, and the liquid temperature in the reaction vessel was kept at 60°C by keeping it warm with a water jacket.

In addition, nitrogen gas was introduced into the reaction vessel to prevent oxidation of the coprecipitate produced by the crystallization reaction. The gas introduced into the reaction tank is not limited to the nitrogen gas, and any gas that does not promote oxidation, such as helium, neon, argon, or carbon dioxide, can be used.

The precipitate obtained was then filtered by suction, washed with water, and dried at 120°C for 12 hours using a box dryer. This produced a precursor of the positive electrode active material.

Then, lithium carbonate and the precursor of the positive electrode active material were mixed so that the ratio (Li/Me) to the number of lithium (Li) atoms, where Me is the sum of the numbers of metal atoms consisting of Ni, Co, and Mn in the precursor of the positive electrode active material, was 1.06, and mixed in an automatic mortar for 30 minutes to obtain a mixed powder. The mixed powder was then filled into an alumina sagger, and calcined in a muffle furnace in an air atmosphere at 750°C for 2 hours, and then heated to 880°C and held at that temperature for 8 hours to obtain a positive electrode active material.

### (Example 6)

First, a 1.5 mol/L mixed metal salt solution was prepared by weighing out a predetermined amount of nickel sulfate, cobalt sulfate, and manganese sulfate so that the Ni:Co:Mn ratio was 50:20:30. The Mg concentration of this mixed metal salt solution was 0.048 g/L.

Next, the mixed metal salt solution, ammonia water, and a 20% by mass aqueous solution of sodium hydroxide were sent to a reaction vessel equipped with an agitator so that the pH in the reaction vessel was 10.1 and the ammonium ion concentration was 9.3 g/L, and a crystallization reaction was carried out to precipitate a nickel-cobalt-manganese composite hydroxide compound. At this time, the rotation speed of the agitator in the reaction vessel was set to 1000 rpm, and the liquid temperature in the reaction vessel was kept at 60°C by using a water jacket.

In addition, nitrogen gas was introduced into the reaction vessel to prevent oxidation of the coprecipitate produced by the crystallization reaction. The gas introduced into the reaction tank is not limited to the nitrogen gas, and any gas that does not promote oxidation, such as helium, neon, argon, or carbon dioxide, can be used.

The precipitate obtained was then filtered by suction, washed with water, and dried at 120°C for 12 hours using a box dryer. This produced a precursor of the positive electrode active material.

Then, lithium carbonate and the precursor of the positive electrode active material were mixed so that the ratio (Li/Me) to the number of lithium (Li) atoms, where Me is the sum of the numbers of metal atoms consisting of Ni, Co, and Mn in the precursor of the positive electrode active material, was 1.06, and mixed in an automatic mortar for 30 minutes to obtain a mixed powder. The mixed powder was then filled into an alumina sagger, and calcined in a muffle furnace in an air atmosphere at 750°C for 2 hours, and then heated to 880°C and held at that temperature for 8 hours to obtain a positive electrode active material.

### (Example 7)

First, a 1.5 mol/L mixed metal salt solution was prepared by weighing out a predetermined amount of nickel sulfate, cobalt sulfate, and manganese sulfate so that the Ni:Co:Mn ratio was 50:20:30. The Mg concentration of this mixed metal salt solution was 0.008 g/L. Next, the mixed metal salt solution, ammonia water, and a 20% by mass aqueous solution of sodium hydroxide were sent to a reaction vessel equipped with an agitator so that the pH in the reaction vessel was 10.6 and the ammonium ion concentration was 14.8 g/L, and a crystallization reaction was carried out to precipitate a nickel-cobalt-manganese composite hydroxide compound. At this time, the rotation speed of the agitator in the reaction vessel was set to 1000 rpm, and the liquid temperature in the reaction vessel was kept at 60°C by keeping it warm with a water jacket. In addition, nitrogen gas was introduced into the reaction vessel to prevent oxidation of the coprecipitate produced by the crystallization reaction. The gas introduced into the reaction tank is not limited to the nitrogen gas, and any gas that does not promote oxidation, such as helium, neon, argon, or carbon dioxide, can be used.

The precipitate obtained was then filtered by suction, washed with water, and dried at 120°C for 12 hours using a box dryer. This produced a precursor of the positive electrode active material.

Then, lithium carbonate and the precursor of the positive electrode active material were mixed so that the ratio (Li/Me) to the number of lithium (Li) atoms, where Me is the sum of the numbers of metal atoms consisting of Ni, Co, and Mn in the precursor of the positive electrode active material, was 1.06, and mixed in an automatic mortar for 30 minutes to obtain a mixed powder. The mixed powder was then filled into an alumina sagger, and calcined in a muffle furnace in an air atmosphere at 750°C for 2 hours, and then heated to 880°C and held at that temperature for 8 hours to obtain a positive electrode active material.

### (Example 8)

First, a 1.5 mol/L mixed metal salt solution was prepared by weighing out a predetermined amount of nickel sulfate, cobalt sulfate, and manganese sulfate so that the Ni:Co:Mn ratio was 82:15:3. The Mg concentration of this mixed metal salt solution was 0.001 g/L.

Next, the mixed metal salt solution, ammonia water, and a 20% by mass aqueous solution of sodium hydroxide were sent to a reaction vessel equipped with an agitator so that the pH in the reaction vessel was 11.2 and the ammonium ion concentration was 13.5 g/L, and a crystallization reaction was carried out to precipitate a nickel-cobalt-manganese composite hydroxide compound. At this time, the rotation speed of the agitator in the reaction vessel was set to 1000 rpm, and the liquid temperature in the reaction vessel was kept at 60°C by keeping it warm with a water jacket.

In addition, nitrogen gas was introduced into the reaction vessel to prevent oxidation of the coprecipitate produced by the crystallization reaction. The gas introduced into the reaction tank is not limited to the nitrogen gas, and any gas that does not promote oxidation, such as helium, neon, argon, or carbon dioxide, can be used.

The precipitate obtained was then filtered by suction, washed with water, and dried at 120°C for 12 hours using a box dryer. This produced a precursor of the positive electrode active material.

Then, lithium hydroxide and the precursor of the positive electrode active material were mixed so that the ratio (Li/Me) to the number of lithium (Li) atoms, where Me is the sum of the numbers of metal atoms consisting of Ni, Co, and Mn in the precursor of the positive electrode active material, was 1.01, and mixed in an automatic mortar for 30 minutes to obtain a mixed powder. The mixed powder was then filled into an alumina sagger and calcined in a muffle furnace in an oxygen atmosphere at 500°C for 8 hours, and then heated to 740°C and held at that temperature for 4 hours to obtain a positive electrode active material.

### (Example 9)

First, a 1.5 mol/L mixed metal salt solution was prepared by weighing out a predetermined amount of nickel sulfate, cobalt sulfate, and manganese sulfate so that the Ni:Co:Mn ratio was 90:7:3. The Mg concentration of this mixed metal salt solution was 0.002 g/L.

Next, the mixed metal salt solution, ammonia water, and a 20% by mass aqueous solution of sodium hydroxide were sent to a reaction vessel equipped with an agitator so that the pH in the reaction vessel was 11.0 and the ammonium ion concentration was 7.2 g/L, and a crystallization reaction was carried out to precipitate a nickel-cobalt-manganese composite hydroxide compound. At this time, the rotation speed of the agitator in the reaction vessel was set to 820 rpm, and the liquid temperature in the reaction vessel was kept at 60°C by keeping it warm with a water jacket.

In addition, nitrogen gas was introduced into the reaction vessel to prevent oxidation of the coprecipitate produced by the crystallization reaction. The gas introduced into the reaction tank is not limited to the nitrogen gas, and any gas that does not promote oxidation, such as helium, neon, argon, or carbon dioxide, can be used.

The precipitate obtained was then filtered by suction, washed with water, and dried at 120°C for 12 hours using a box dryer. This produced a precursor of the positive electrode active material.

Then, lithium hydroxide and the precursor of the positive electrode active material were mixed so that the ratio (Li/Me) to the number of lithium (Li) atoms, where Me is the sum of the number of metal atoms consisting of Ni, Co, and Mn in the precursor of the positive electrode active material, was 1.01, and mixed in an automatic mortar for 30 minutes to obtain a mixed powder. The mixed powder was then filled into an alumina sagger and fired in a muffle furnace in an oxygen atmosphere at 500°C for 8 hours, and then heated to 720°C and held at that temperature for 4 hours to obtain a positive electrode active material.

### (Example 10)

First, a 1.5 mol/L mixed metal salt solution was prepared by weighing out a predetermined amount of nickel sulfate, cobalt sulfate, and manganese sulfate so that the Ni:Co:Mn ratio was 90:7:3. The Mg concentration of this mixed metal salt solution was 0.001 g/L.

Next, the mixed metal salt solution, ammonia water, and a 20% by mass aqueous solution of sodium hydroxide were sent to a reaction vessel equipped with an agitator so that the pH in the reaction vessel was 11.0 and the ammonium ion concentration was 10.0 g/L, and a crystallization reaction was carried out to precipitate a nickel-cobalt-manganese composite hydroxide compound. At this time, the rotation speed of the agitator in the reaction vessel was 820 rpm, and the liquid temperature in the reaction vessel was kept at 60°C by keeping it warm with a water jacket.

In addition, nitrogen gas was introduced into the reaction vessel to prevent oxidation of the coprecipitate produced by the crystallization reaction. The gas introduced into the reaction tank is not limited to the nitrogen gas, and any gas that does not promote oxidation, such as helium, neon, argon, or carbon dioxide, can be used.

The precipitate obtained was then filtered by suction, washed with water, and dried at 120°C for 12 hours using a box dryer. This produced a precursor of the positive electrode active material.

Then, lithium hydroxide and the precursor of the positive electrode active material were mixed so that the ratio (Li/Me) to the number of lithium (Li) atoms, where Me is the sum of the number of metal atoms consisting of Ni, Co, and Mn in the precursor of the positive electrode active material, was 0.98, and mixed in an automatic mortar for 30 minutes to obtain a mixed powder. The mixed powder was then filled into an alumina sagger and calcined in a muffle furnace in an oxygen atmosphere at 500°C for 8 hours, and then heated to 720°C and held at that temperature for 4 hours to obtain a positive electrode active material.

### (Example 11)

First, a 1.5 mol/L mixed metal salt solution was prepared by weighing out a predetermined amount of nickel sulfate, cobalt sulfate, and manganese sulfate so that the Ni:Co:Mn ratio was 50:20:30. The Mg concentration of this mixed metal salt solution was 0.094 g/L.

Next, the mixed metal salt solution, ammonia water, and a 20% by mass aqueous solution of sodium hydroxide were sent to a reaction vessel equipped with an agitator so that the pH in the reaction vessel was 10.2 and the ammonium ion concentration was 10.5 g/L, and a crystallization reaction was carried out to precipitate a nickel-cobalt-manganese composite hydroxide compound. At this time, the rotation speed of the agitator in the reaction vessel was set to 1000 rpm, and the liquid temperature in the reaction vessel was kept at 60°C by keeping it warm with a water jacket.

In addition, nitrogen gas was introduced into the reaction vessel to prevent oxidation of the coprecipitate produced by the crystallization reaction. The gas introduced into the reaction tank is not limited to the nitrogen gas, and any gas that does not promote oxidation, such as helium, neon, argon, or carbon dioxide, can be used.

The precipitate obtained was then filtered by suction, washed with water, and dried at 120°C for 12 hours using a box dryer. This produced a precursor of the positive electrode active material.

Then, lithium carbonate and the precursor of the positive electrode active material were mixed so that the ratio (Li/Me) to the number of lithium (Li) atoms, where Me is the sum of the numbers of metal atoms consisting of Ni, Co, and Mn in the precursor of the positive electrode active material, was 1.06, and mixed in an automatic mortar for 30 minutes to obtain a mixed powder. The mixed powder was then filled into an alumina sagger, and calcined in a muffle furnace in an air atmosphere at 750°C for 2 hours, and then heated to 880°C and held at that temperature for 8 hours to obtain a positive electrode active material.

### (Comparative Example 1)

First, a 1.5 mol/L mixed metal salt solution was prepared by weighing out a predetermined amount of nickel sulfate, cobalt sulfate, and manganese sulfate so that the Ni:Co:Mn ratio was 50:20:30. The Mg concentration of this mixed metal salt solution was 0.13 g/L.

Next, the mixed metal salt solution, ammonia water, and a 20% by mass aqueous solution of sodium hydroxide were sent to a reaction vessel equipped with an agitator so that the pH in the reaction vessel was 10.2 and the ammonium ion concentration was 11.1 g/L, and a crystallization reaction was carried out to precipitate a nickel-cobalt-manganese composite hydroxide compound. At this time, the rotation speed of the agitator in the reaction vessel was set to 1000 rpm, and the liquid temperature in the reaction vessel was kept at 60°C by keeping it warm with a water jacket.

In addition, nitrogen gas was introduced into the reaction vessel to prevent oxidation of the coprecipitate produced by the crystallization reaction. The gas introduced into the reaction tank is not limited to the nitrogen gas, and any gas that does not promote oxidation, such as helium, neon, argon, or carbon dioxide, can be used.

The precipitate obtained was then filtered by suction, washed with water, and dried at 120°C for 12 hours using a box dryer. This produced a precursor of the positive electrode active material.

Then, lithium carbonate and the precursor of the positive electrode active material were mixed so that the ratio (Li/Me) to the number of lithium (Li) atoms, where Me is the sum of the numbers of metal atoms consisting of Ni, Co, and Mn in the precursor of the positive electrode active material, was 1.06, and mixed in an automatic mortar for 30 minutes to obtain a mixed powder. The mixed powder was then filled into an alumina sagger, and calcined in a muffle furnace in an air atmosphere at 750°C for 2 hours, and then heated to 880°C and held at that temperature for 8 hours to obtain a positive electrode active material.

### (Composition)

The compositions of the precursors and positive electrode active material powders of Examples 1 to 11 and Comparative Example 1 were measured as follows.

Regarding the nickel, cobalt, and manganese compositions, a specified amount of each of the obtained precursors and positive electrode active material samples (powders) was weighed out, decomposed by an alkali fusion method, and then a composition analysis was performed using a Hitachi High-Tech inductively coupled plasma optical emission spectrometer (ICP-OES) "PS7800".

Regarding the magnesium composition of the precursors and positive electrode active material, a specified amount of each of the obtained precursors and positive electrode active material samples (powders) was weighed out, dissolved by acid decomposition, and then a composition analysis was performed using an SII NanoTechnology ICP mass spectrometer (ICP-MS) "SPQ9700".

### (Average particle size D50)

The average particle size D50 of the precursor and positive electrode active material powders of Examples 1 to 11 and Comparative Example 1 was measured as follows.

100 mg of each obtained precursor and positive electrode active material sample (powder) was dispersed by irradiating with 40 W ultrasonic waves for 60 seconds at 50% flow rate using a Microtrac laser diffraction particle size distribution analyzer "MT3300EXII", and then the particle size distribution was measured to obtain a volume-based cumulative particle size distribution curve. In the obtained cumulative particle size distribution curve, the volume particle size at 50% accumulation was taken as the 50% cumulative volume particle size D50 (average particle size D50) of the positive electrode active material powder. The water-soluble solvent used in the measurement was passed through a 0.02 µm filter, the solvent refractive index was 1.333, the particle permeability conditions were permeable, the particle refractive index was 1.81, the shape was non-spherical, the measurement range was 0.021 to 2000 µm, and the measurement time was 30 seconds.

### (Tap density)

The tap density of the precursors and the positive electrode active material powders of Examples 1 to 11 and Comparative Example 1 was measured as follows.

5 g of each of the obtained precursors and positive electrode active material samples (powder) was placed in a 10 cc graduated cylinder and placed in a powder density measuring instrument "KYT-4000K" manufactured by Seishin Enterprise Co., Ltd., and tapped 1500 times with a stroke length of 55 mm, after which the graduations on the graduated cylinder were read. Next, the "sample amount (5 g) / graduation reading on the graduated cylinder (cc)" was calculated, and this was taken as the tap density (g/cc).

### (BET specific surface area)

The BET specific surface area of the precursors and positive electrode active material powders of Examples 1 to 11 and Comparative Example 1 was measured as follows.

1.0 g of each of the obtained precursors and positive electrode active material samples (powder) was weighed into a glass cell, set in a degassing device, and the glass cell was filled with nitrogen gas, and then heat-treated in a nitrogen gas atmosphere at 40°C for 20 minutes to degas. The glass cell containing the degassed sample (powder) was then set in a Quantachrome specific surface area measuring device "Monosorb Model MS-21", and the specific surface area X was measured by the BET method (single point method) while flowing a He: 70 at% - N2: 30 at% mixed gas as the adsorption gas.

### (c-axis lattice constant)

The c-axis lattice constant of the positive electrode active material powders of Examples 1 to 11 and Comparative Example 1 was measured as follows.

The following XRD diffraction device and conditions were used.
- XRD diffraction device: SmartLab (Rigaku Corporation)
- Radiation source: CuKα (λ=1.5406 Å)
- Sample (positive electrode active material) was applied to a glass sample holder (2 cm x 1.5 cm, 0.3 mm deep).
- Detector: D/tex
- Measurement range: 2θ = 10° to 80°
- Scan axis: 2θ/θ, Scan speed: 1 degree min-1
- Step width: 0.01 degrees
- Slit width: IS (DS) 1/4°, RS1 10 mm, RS2 10 mm

The c-axis lattice constant was calculated using the analysis software "PDXL, Rigaku Corporation" from the peaks derived from a total of nine crystal faces, (003), (101), (012), (104), (015), (107), (018), (110), and (113), in the XRD diffraction pattern measured under the above conditions.

### (Discharge capacity)

The discharge capacity was measured for each of the positive electrode active material powders of Examples 1 to 11 and Comparative Example 1.

The manufacturing conditions and evaluation results of the above-mentioned Examples 1 to 11 and Comparative Example 1 are shown in Tables 1 and 2.

**[Table 1]**

| | Crystallization reaction conditions | | | | Precursor powder properties | | | Precursor Composition | | | | Firing conditions | |
|---|---|---|---|---|---|---|---|---|---|---|---|---|---|
| | Reaction temperature | Ammonium ion concentration | pH | Agitator blade rotation speed | Average particle size D50 | Tap Density | BET specific surface area | Ni | Co | Mn | Mg | Li/Me ratio | Firing temperature |
| | °C | g/L | | r p m | µ m | g/cc | m²/g | mol% | mol% | mol% | mol% | | °C |
| EX.1 | 60 | 10.3 | 10.6 | 1000 | 5.9 | 1.9 | 10.9 | 50 | 20 | 30 | 0.030 | 1.06 | 900 |
| EX.2 | 60 | 11.5 | 10.4 | 1000 | 7.6 | 2.1 | 5.3 | 50 | 20 | 30 | 0.028 | 1.09 | 900 |
| EX.3 | 60 | 8.2 | 10.3 | 1000 | 10.3 | 2.3 | 5.1 | 50 | 20 | 30 | 0.031 | 1.06 | 880 |
| EX.4 | 60 | 11.2 | 10.1 | 1000 | 10.2 | 2.3 | 4.5 | 50 | 20 | 30 | 0.029 | 1.06 | 900 |
| EX.5 | 60 | 11.3 | 10.2 | 1000 | 9.9 | 2.3 | 5.4 | 50 | 20 | 30 | 0.029 | 1.06 | 880 |
| EX.6 | 60 | 9.3 | 10.1 | 1000 | 9.7 | 2.3 | 4.4 | 50 | 20 | 30 | 0.181 | 1.06 | 880 |
| EX.7 | 60 | 14.8 | 10.6 | 1000 | 9.2 | 2.2 | 4.2 | 50 | 20 | 30 | 0.029 | 1.06 | 880 |
| EX.8 | 60 | 13.5 | 11.2 | 1000 | 4.0 | 1.8 | 4.2 | 82 | 15 | 3 | 0.005 | 1.01 | 740 |
| EX.9 | 60 | 7.2 | 11.0 | 820 | 4.5 | 1.9 | 10.6 | 90 | 7 | 3 | 0.006 | 1.01 | 720 |
| EX.10 | 60 | 10.0 | 11.0 | 820 | 5.6 | 1.9 | 6.9 | 90 | 7 | 3 | 0.006 | 0.98 | 720 |
| EX.11 | 60 | 10.5 | 10.2 | 1000 | 10.1 | 2.2 | 5.3 | 50 | 20 | 30 | 0.294 | 1.06 | 880 |
| Comp.EX.1 | 60 | 11.1 | 10.2 | 1000 | 9.2 | 2.3 | 4.6 | 50 | 20 | 30 | 0.452 | 1.06 | 880 |

**[Table 2]**

| | Positive electrode active material powder characteristics | | | | Positive electrode active material composition | | | | | Electrochemical properties |
|---|---|---|---|---|---|---|---|---|---|---|
| | Average particle size D50 | BET specific surface area | Tap Density | c-axis | Ni | Co | Mn | Mg | Li/Me ratio | Discharge capacity |
| | *µ* m | m²/g | g/cc | Å | mol% | mol% | mol% | mol% | | mAh/g |
| EX.1 | 5.9 | 0.70 | 2.1 | 14.233 | 49.9 | 19.7 | 30.4 | 0.038 | 1.05 | 174 |
| EX.2 | 7.4 | 0.34 | 2.4 | 14.232 | 49.4 | 19.9 | 30.8 | 0.038 | 1.09 | 176 |
| EX.3 | 9.9 | 0.24 | 2.6 | 14.235 | 49.3 | 19.8 | 30.9 | 0.041 | 1.07 | 175 |
| EX.4 | 9.9 | 0.29 | 2.5 | 14.235 | 49.1 | 19.6 | 31.2 | 0.029 | 1.05 | 173 |
| EX.5 | 9.4 | 0.28 | 2.6 | 14.238 | 50.1 | 20.2 | 29.8 | 0.028 | 1.06 | 176 |
| EX.6 | 9.1 | 0.30 | 2.6 | 14.238 | 49.8 | 20.4 | 29.8 | 0.158 | 1.08 | 178 |
| EX.7 | 8.6 | 0.32 | 2.5 | 14.239 | 50.1 | 20.1 | 29.8 | 0.041 | 1.08 | 176 |
| EX.8 | 4.1 | 0.67 | 2.2 | 14.185 | 82.1 | 14.9 | 2.9 | 0.005 | 1.01 | 220 |
| EX.9 | 6.5 | 0.64 | 2.1 | 14.195 | 90.1 | 6.9 | 3.0 | 0.006 | 1.01 | 225 |
| EX.10 | 6.0 | 0.44 | 2.1 | 14.184 | 89.9 | 7.0 | 3.1 | 0.006 | 0.98 | 223 |
| EX.11 | 9.5 | 0.29 | 2.6 | 14.240 | 49.9 | 20.2 | 29.8 | 0.294 | 1.05 | 176 |
| Comp.EX.1 | 8.7 | 0.32 | 2.5 | 14.243 | 49.7 | 20.3 | 30.0 | 0.452 | 1.03 | 166 |

### (Evaluation Results)

The positive electrode active materials of Examples 1 to 11 all had the following composition formula. Note that the "Li/Me ratio" in Tables 1 and 2 indicates the composition ratio of Li to the total of Ni, Co, Mn, and Mg in the positive electrode active material. Formula: LiaNi_{(1-b-c-d)}Co_{b}Mn_{c}Mg_{d}O₂
(In the formula, 0.98≤a≤1.09, 0.06≤b≤0.21, 0.02≤c≤0.32, 0.00005≤d≤0.003.)

The positive electrode active materials of Examples 1 to 11 all had a 50% cumulative volumetric particle size D50 of 3.0 to 11.0 µm, a tap density of 2.0 to 2.6 g/cc, and a c-axis lattice constant of 14.184 to 14.240 Å, and had good battery characteristics (discharge capacity).

The positive electrode active material of Comparative Example 1 had a Mg composition d exceeding 0.003, and its battery characteristics (discharge capacity) were inferior to those of Examples 1 to 11.

## Claims

1. A positive electrode active material for a lithium ion battery, represented by the formula: LiaNi_{(1-b-c-d)}Co_{b}Mn_{c}Mg_{d}O₂
(wherein, in the formula, 0.98≤a≤1.09, 0.06≤b≤0.21, 0.02≤c≤0.32, 0.00005≤d≤0.003), having a 50% cumulative volumetric particle size D50 of 3.0 to 11.0 µm, a tap density of 2.0 to 2.6 g/cc, and a c-axis lattice constant of 14.184 to 14.240 Å.

2. The positive electrode active material for a lithium ion battery according to claim 1, having a BET specific surface area of 0.20 to 0.80 m²/g.

3. A positive electrode for a lithium ion battery, comprising the positive electrode active material for a lithium ion battery according to claim 1 or 2.

4. A lithium ion battery comprising the positive electrode and negative electrode for lithium ion batteries according to claim 3.

5. A method for producing a precursor of a positive electrode active material for a lithium ion battery, comprising:
carrying out a crystallization reaction using an aqueous solution containing (a) a nickel salt, (b) a cobalt salt, (c) a manganese salt, and (d) a magnesium salt, and (e) a basic aqueous solution containing ammonia and/or an alkaline aqueous solution of an alkali metal as a reaction solution, while controlling a pH of the reaction solution to 10.0 to 11.5, an ammonium ion concentration to 5 to 20 g/L, and a solution temperature to 59 to 61°C,
wherein the precursor of a positive electrode active material for a lithium ion battery is represented by the formula: Ni_{(1-b-c-d)}CO_{b}Mn_{c}Mg_{d}(OH)₂
(wherein, in the formula, 0.06≤b≤0.21, 0.02≤c≤0.32, 0.00005≤d≤0.003) and
wherein the precursor of a positive electrode active material for a lithium ion battery has a 50% cumulative volumetric particle size D50 of 3.0 to 11.0 µm, a tap density of 1.8 to 2.3 g/cc, and a BET specific surface area of 4.0 to 12.0 m²/g.

6. A method for producing a positive electrode active material for a lithium ion battery, comprising: mixing a precursor produced by the method for producing a precursor for a positive electrode active material for a lithium ion battery according to claim 5 with a lithium source so that a ratio of Liₙ/Meₙ, where Meₙ is a sum of atomic numbers of metals consisting of Ni, Co, Mn, and Mg (Meₙ) and Liₙ is atomic number of lithium, is 0.98 to 1.09 to form a lithium mixture; and baking the lithium mixture in air or an oxygen atmosphere at 450 to 750°C for 2 to 15 hours, and then baking it at 700 to 900°C for 2 to 15 hours.
